# EUROPEAN PATENT APPLICATION

(11) **EP 4 410 104 A1**
(43) Date of publication of application: **07.08.2024**
(21) Application number: 22876136.7
(22) Date of filing: 26.09.2022
(51) Int. Cl.: A23C 20/02, A23J 3/00, A23L 11/00, A23L 11/40

(54) **CHEESE-LIKE FOOD PRODUCT**

(30) Priority: 30.09.2021 JP 2021160854
(71) Applicant: ADEKA CORPORATION, Arakawa-ku Tokyo 116-8554 (JP)
(72) Inventor: ABE, Kazumasa, Tokyo 116-8554 (JP); OZAKI, Satoru, Tokyo 116-8554 (JP); SASAKI, Kazuhiro, Tokyo 116-8554 (JP)
(74) Representative: Hoffmann Eitle
(86) International application number: PCT/JP2022/035751
(87) International publication number: WO 2023/054269

(57) **Abstract**

The present invention provides a cheese-like food which can achieve the following 1) to 3):
1) having a suppressed odd taste;
2) having a smooth texture and a refreshing sour taste; and
3) having favorable emulsion stability.
The cheese-like food includes an emulsified composition containing: 1 to 10% by mass in terms of solid content of beans containing 50 to 90% by mass of a carbohydrate in the solid content; and 1 to 10% by mass of a swelling-inhibiting starch, and the cheese-like food has a pH of 3.5 to 7.5 and a water content of 45 to 70% by mass.

## Description

### TECHNICAL FIELD

The present invention relates to cheese-like foods.

### BACKGROUND ART

Cheese is broadly classified into two categories: natural cheese and processed cheese.

Natural cheese produced without maturation is called fresh cheese. Since fresh cheese has a refreshing sour taste and has a milder taste compared to matured cheese, many people like to eat fresh cheese.

Fresh cheese is produced by coagulating milk with lactic acid bacteria or an enzyme and removing whey. As a result, the physical properties, other than the taste, of fresh cheese include a high water content and being soft. On the other hand, matured cheese is produced by coagulating milk with lactic acid bacteria or an enzyme, removing whey, and then performing a process of removing water by use of a press or the like or drying through a maturation period during production. As a result, the physical properties of matured cheese include a lower water content than fresh cheese, being hard, and being tough when chewed. Matured cheese is thus different from fresh cheese in terms of physical properties.

Among fresh cheeses, cream cheese is liked by the people. Cream cheese, which has low stringiness and a smooth texture, is not only eaten directly, but also used as a raw material for various types of foods including baked confectionery such as cheesecake and tiramisu because of the smoothness.

In recent years, due to increased health concerns of consumers, plant foods have garnered attention. These plant foods are either made from a plant material, produced with a reduced animal-derived material content, or produced without the animal-derived material. As for cheese, a technique related to a plant cheese-like food has been studied. This technique uses a plant material and reproduces the texture, taste, and physical properties of cheese made from milk.

A technique related to a plant cheese-like food that is made from a soybean-derived raw material, which serves as a plant material in the production of the plant cheese-like food, has been reported. For example, Patent Literature 1 discloses a cream cheese-like food that is produced by acidifying an emulsion containing a fat and oil and a soy protein hydrolysate that has been obtained by a protease treatment in a neutral to alkaline range. Patent Literature 2 discloses a soy protein-containing cheese-like food that contains a soy protein, and also contains an acid-treated starch and a fat and oil that has a solid fat content (SFC) at 10°C of 45% or more and an SFC at 20°C of 20% or less. It is noted that the emulsification characteristics of the soybean-derived protein are described in Non-Patent Literature 1.

Furthermore, a cheese-like food that is made from a starch as a main raw material without using a soybean-derived raw material has been studied. For example, Patent Literature 3 discloses a cheese-like processed food that contains an oxidized starch, a hydroxypropyl starch, a fat and oil having a rising melting point of 30°C or higher, and water. Furthermore, this food has a milk protein content of 0.1% by mass or less, an amylose content of 0.1 to 23% by mass relative to the whole amount of the oxidized starch, and a certain degree of stringiness when heated even though there is practically no milk protein.

### RELATED ART REFERENCE

### Patent Literature

Patent Literature 1: WO 2006/135089
Patent Literature 2: Japanese Patent Application Laid-Open No. 2014-233270 A
Patent Literature 3: Japanese Patent Application Laid-Open No. 2018-174712 A

### Non-Patent Literature

Non-Patent Literature 1: Nobuko Egi, et al., "Rheological Investigation of Soybean Protein Emulsion and Application to Food Products", Nippon Shokuhin Kagaku Kogaku Kaishi 63(5), pp. 225 to 235

### SUMMARY OF INVENTION

### PROBLEM TO BE SOLVED BY THE INVENTION

When a soybean-derived raw material is used as a plant material in the production of a plant cheese-like food, in a similar manner to the techniques described in Patent Literatures 1 and 2, a problem arises where the presence of an unfavorable taste derived from soybeans becomes probable. When a powdered soybean-derived raw material is used, a rough texture is obtained, and a smooth texture is not able to be achieved. General cheese is characterized by having a sour taste that accompanies the decrease in pH caused by lactic acid fermentation. As shown in FIG. 5 and Table 1 in Non-Patent Literature 1, it has been known that, under an acidic condition, a soybean-derived protein has a decreased emulsion stability, which is a force that maintains emulsification. Therefore, when the pH is decreased to give a sour taste to a plant cheese-like food made from a soybean-derived protein or a soybean-derived raw material, demulsification is likely to occur, leading to a problem of phase separation into oil and water.

In order to achieve stringiness, the cheese-like food described in Patent Literature 3 needs to contain a large amount of a starch. As a result, the texture of the cheese-like food is pasty and sticky. Thus, it is difficult to achieve a smooth texture, like with cream cheese, which has no stringiness, with the cheese-like food described in Patent Literature 3.

Therefore, an object of the present invention is to provide a cheese-like food that can achieve the following 1) to 3):
1) having a suppressed odd taste;
2) having a smooth texture and a refreshing sour taste; and
3) having favorable emulsion stability.

### MEANS FOR SOLVING PROBLEM

As a result of intensive studies, the present inventors have found that a cheese-like food that includes an emulsion composition containing a swelling-inhibiting starch and beans containing a specific amount of a carbohydrate and that has a pH and a water content thereof within respective specific ranges, can solve the above-mentioned problems.

The present invention has been made on the basis of the above-mentioned findings, and has the following configuration.
(1) A cheese-like food comprising an emulsified composition containing:
   1 to 10% by mass in terms of solid content of beans containing 50 to 90% by mass of a carbohydrate in the solid content; and
   1 to 10% by mass of a swelling-inhibiting starch,
   wherein the cheese-like food has a pH of 3.5 to 7.5 and a water content of 45 to 70% by mass.
(2) The cheese-like food according to (1), wherein the beans containing 50 to 90% by mass of the carbohydrate in the solid content is one or more types of beans selected from the group consisting of an adzuki bean, a kidney bean, a pinto bean, a red kidney bean, a cowpea, a mung bean, a broad bean, a chickpea, a lentil, a lima bean, and a garden pea.
(3) The cheese-like food according to (1) or (2), wherein the beans containing 50 to 90% by mass of the carbohydrate in the solid content is beans that have been subjected to a heating treatment.
(4) The cheese-like food according to (1) or (2), wherein the swelling-inhibiting starch is a processed starch that has been subjected to at least a cross-linking treatment.
(5) The cheese-like food according to (3), wherein the swelling-inhibiting starch is a processed starch that has been subjected to at least a cross-linking treatment.
(6) The cheese-like food according to any one of (1) to (5), having an oil content of 10 to 53% by mass.
(7) The cheese-like food according to any one of (1) to (6), wherein a content of an animal-derived material is 10% by mass or less in the cheese-like food.
(8) A food product produced using the cheese-like food according to any one of (1) to (7).
(9) A method for producing a cheese-like food comprising:
   a step of mixing and emulsifying an oil phase containing beans containing 50 to 90% by mass of a carbohydrate in a solid content and an aqueous phase containing a swelling-inhibiting starch to obtain a preliminary emulsion;
   a step of adjusting a pH of the preliminary emulsion to be from 3.5 to 7.5;
   a step of homogenizing the pH-adjusted preliminary emulsion to obtain an emulsion composition; and
   a step of heat-sterilizing the obtained emulsion composition and then cooling it to 20°C or lower.

### EFFECT OF THE INVENTION

According to the present invention, it is possible to provide a cheese-like food that can achieve the following 1) to 3):
1) having a suppressed odd taste;
2) having a smooth texture and a refreshing sour taste; and
3) having favorable emulsion stability.

### EMBODIMENT FOR CARRYING OUT THE INVENTION

Hereinafter, the present invention will be described according to its suitable embodiments. The present invention is not limited by the following description, and each constituent element may be appropriately modified without departing from the scope of the gist of the present invention.

### [Cheese-like food]

A cheese-like food of the present invention is a cheese-like food including an emulsified composition containing 1 to 10% by mass in terms of solid content of beans containing 50 to 90% by mass of a carbohydrate in the solid content, and 1 to 10% by mass of a swelling-inhibiting starch, wherein the cheese-like food has a pH of 3.5 to 7.5 and a water content of 45 to 70% by mass.

In the present invention, a "cheese-like food" refers to a natural cheese or a processed cheese that is deemed to be such by the Ministerial Ordinance on Milk and Milk Products Concerning Compositional Standards, etc. A "cheese-like food" can also refer to a food that is not categorized into these cheeses but has a cheese-like texture and taste. Among cheeses, the cheese-like food of the present invention is preferably a fresh cheese-like food with a smooth texture, more preferably a cream cheese-like food having no stringiness. The cheese-like food of the present invention preferably has a water content of 45 to 70% by mass and a fat and oil (oil) content of 10% by mass or more. It is noted that the fat and oil (oil) content used herein refers to the total amount of a fat and oil used for the cheese-like food of the present invention and a fat and oil contained in raw materials other than the fat and oil.

In the present invention, the "solid content" refers to components other than water.

### - Beans -

Beans used for the cheese-like food of the present invention will be first described.

The beans used for the cheese-like food of the present invention are beans containing 50 to 90% by mass of a carbohydrate in the solid content (hereinafter sometimes simply referred to as "high-carbohydrate beans").

In the present invention, the carbohydrate is a monosaccharide or a polymer having a monosaccharide as a minimum unit, and includes a saccharide, an oligosaccharide, and a polysaccharide. Examples of the saccharide include saccharides and disaccharides, such as glucose, fructose, galactose, sucrose, lactose, and maltose. Examples of the oligosaccharide include oligosaccharides having a polymerization degree of 3 to 9, such as a galactooligosaccharide, a fructooligosaccharide, and an isomaltooligosaccharide. Examples of the polysaccharide include starches such as amylose and amylopectin, and non-starchy polysaccharides such as cellulose, hemicellulose, pectin, and a dietary fiber.

From the viewpoint of making the texture of the cheese-like food of the present invention smoother and improving emulsion stability, the high-carbohydrate beans used for the cheese-like food contain 50 to 90% by mass of a carbohydrate in the solid content. The lower limit of the content of the carbohydrate is preferably 55% by mass or more, more preferably 56% by mass or more, 58% by mass or more, or 60% by mass or more. The upper limit of the content of the carbohydrate is preferably 80% by mass or less, more preferably 75% by mass or less, 74% by mass or less, 72% by mass or less, or 70% by mass or less. Therefore, in one embodiment, the high-carbohydrate beans preferably contain 50 to 80% by mass of a carbohydrate, more preferably 55 to 75% by mass of a carbohydrate in the solid content.

Hereinafter, the beans containing less than 50% by mass of a carbohydrate in the solid content are sometimes referred to as "low-carbohydrate beans".

The content of the carbohydrate of beans is determined by subtracting the total amount of the separately measured amounts of protein, oil, ash, and water from the weight of the beans. The determined content of the carbohydrate of the beans is divided by the amount of solid content in the beans, to obtain the relative amount of the carbohydrate in the solid content of the beans.

In the measurement of each of the amounts of protein, oil, ash, and water in the beans, conventionally known measurement methods can be used as measurement methods for protein, oil, ash, and water in the food.

Examples of the measurement method for protein include the Kjeldahl method and a combustion method.

Examples of the measurement method for oil include an ether extraction method, a chloroform/methanol mixed liquid extraction method, and an acid decomposition method.

Examples of the measurement method for ash include a magnesium acetate addition ashing method and a direct ashing method.

Examples of the measurement method for water include the Karl Fischer method.

The same methods can be adopted to the measurement methods mentioned below for measuring the carbohydrate, protein, oil, ash, and water in the present invention.

The state and form of the beans used in the measurements are not particularly limited. Unheated beans and beans heated by procedures such as drying, roasting, steaming, and boiling can be subjected to the measurement. In addition, beans processed into various types of forms such as powder and paste can be subjected to the measurement.

Examples of the beans include a soybean, a peanut, a black bean, an adzuki bean, a kidney bean, a pinto bean, a red kidney bean, a cowpea, a mung bean, a broad bean, a chickpea, a lentil, a lima bean, and a garden pea. From the viewpoint of making the texture of the cheese-like food smoother and improving emulsion stability, the high-carbohydrate beans are used in the present invention.

Examples of the high-carbohydrate beans that can be used for the cheese-like food of the present invention include an adzuki bean, a kidney bean, a pinto bean, a red kidney bean, a cowpea, a mung bean, a broad bean, a chickpea, a lentil, a lima bean, and a garden pea. One type selected from these may be solely used, and two or more types thereof may also be used in combination.

From the viewpoint of reducing the odd taste of the cheese-like food of the present invention and making the texture smoother, or from the viewpoint of improving emulsion stability even under an acidic condition, the beans in the cheese-like food of the present invention are preferably one or more types of high-carbohydrate beans selected from the group consisting of an adzuki bean, a kidney bean, a mung bean, a broad bean, a chickpea, a lentil, and a garden pea, more preferably one or more types of high-carbohydrate beans selected from the group consisting of a kidney bean, a chickpea, a lentil, and a garden pea, still more preferably one or more types of high-carbohydrate beans selected from the group consisting of a chickpea and a lentil. From the viewpoint of obtaining a cheese-like food having a much smoother texture, a chickpea that contains a larger amount of oil than other high-carbohydrate beans is particularly preferably selected and used.

Although high-carbohydrate beans from which a specific component is extracted or separated can be used as the high-carbohydrate beans used in the cheese-like food of the present invention, the cheese-like food preferably contains whole high-carbohydrate beans.

Examples of a method for incorporating whole high-carbohydrate beans include a method in which the high-carbohydrate beans themselves, a block or granule obtained by pulverizing the high-carbohydrate beans, or a powder or paste of the high-carbohydrate beans is incorporated. In the present invention, for example, two or more types of high-carbohydrate beans having different forms, such as high-carbohydrate beans in paste form and high-carbohydrate beans in powder form, can be used in combination. In the present invention, from the viewpoint of making the texture of the cheese-like food smoother and improving emulsion stability, high-carbohydrate beans in paste form and in powder form are more preferably used, and high-carbohydrate beans in powder form are particularly preferably used.

Examples of the high-carbohydrate beans obtained by extracting the specific component therefrom include bean polysaccharides, bean proteins, and plant milk derived from beans.

Examples of the high-carbohydrate beans obtained by separating the specific component therefrom include defatted beans and bean fibers.

It is noted that the high-carbohydrate beans obtained by extracting or separating the specific component therefrom need to contain 50 to 90% by mass of a carbohydrate in the solid content.

In the present invention, a block of the high-carbohydrate beans refers to a block having a particle diameter of more than 3 mm and 1 cm or less, a granule of the high-carbohydrate beans refers to a granule having a particle diameter of more than 0.5 mm and 3 mm or less, and a powder of the high-carbohydrate beans refers to a powder having a particle diameter of 0.5 mm or less, preferably 0.01 to 0.3 mm.

As a method for reducing the particle diameter of the high-carbohydrate beans to fall within the above-mentioned range, conventionally known methods can be used. Examples thereof include a method for breaking the high-carbohydrate beans with a rolling pin, a hammer, or the like, a method for pulverizing the high-carbohydrate beans with a mill or a pulverizer, and a method for grinding the high-carbohydrate beans with a mill stone or the like.

The high-carbohydrate beans may be beans that have been subjected to a heating treatment. The heating treatment is, for example, one or two or more of wet heat treatments such as steaming and boiling, and dry heat treatments such as roasting, torrefaction, and drying.

Among these treatments, from the viewpoint of improving the taste of the cheese-like food of the present invention and improving emulsion stability, high-carbohydrate beans that have been subjected to a wet heat treatment are preferably used. In particular, high-carbohydrate beans that have been subjected to a steaming treatment are particularly preferably used since elution of aqueous components is more likely to be suppressed than with a heating treatment through boiling.

The heating condition of the heating treatment is not particularly limited. For example, when the wet heat treatment is performed, the heating temperature is preferably 60 to 130°C, more preferably 70 to 120°C, and the heating time is preferably 10 seconds to 10 hours, more preferably 30 seconds to 1 hour.

When the dry heat treatment is performed, the heating temperature is preferably 80 to 200°C, more preferably 100 to 180°C, and the heating time is preferably 10 seconds to 30 minutes, more preferably 30 seconds to 15 minutes.

The high-carbohydrate beans used for the cheese-like food of the present invention may not or may be threshed. From the viewpoint of improving the emulsion stability of the cheese-like food of the present invention, the high-carbohydrate beans that are not threshed or a material obtained by processing the high-carbohydrate beans that are not threshed is preferably used.

The content of the high-carbohydrate beans in the cheese-like food of the present invention is 1 to 10% by mass in terms of the solid content.

When the content of the high-carbohydrate beans in the cheese-like food of the present invention falls within the above-mentioned range, a cheese-like food having a suppressed odd taste and a smooth texture can be obtained. Even when the pH is adjusted to an acidic side, a cheese-like food having favorable emulsion stability can be obtained.

From the viewpoint of obtaining a cheese-like food that has a suppressed odd taste, a smoother texture, and an improved emulsion stability, the content of the high-carbohydrate beans in the cheese-like food of the present invention is 1 to 10% by mass in terms of solid content. The lower limit thereof is preferably 2% by mass or more or 2.5% by mass or more, more preferably 3% by mass or more or 3.5% by mass or more. The upper limit thereof is preferably 8% by mass or less, more preferably 6% by mass or less. Therefore, in one embodiment, the content of the high-carbohydrate beans in the cheese-like food of the present invention is preferably 2 to 8% by mass, more preferably 3 to 6% by mass, in terms of the solid content.

The water content of the high-carbohydrate beans depends on the form of the high-carbohydrate beans, and is preferably 95% by mass or less, more preferably 0.5 to 80% by mass, still more preferably 1 to 30% by mass, in the high-carbohydrate beans.

The cheese-like food of the present invention may contain another bean-derived material as long as the cheese-like food contains the predetermined amount of the high-carbohydrate beans.

As the other bean-derived material, the cheese-like food may contain a "material that is obtained by processing the high-carbohydrate beans as a raw material and that has less than 50% by mass or more than 90% by mass of a carbohydrate in the solid content", "low-carbohydrate beans", or a "material that is obtained by processing the low-carbohydrate beans as a raw material".

Examples of the other bean-derived material include bean polysaccharides, bean proteins, plant milk derived from beans, and bean fibers. One or two or more types selected from these may be used. When the other bean-derived material is used, the cheese-like food preferably contains the other bean-derived material in an amount of up to 5% by mass, preferably up to 3% by mass, in terms of the solid content. The minimum content of the other bean-derived material is preferably 0.01% by mass in terms of the solid content in the cheese-like food.

When the other bean-derived material is used for the cheese-like food of the present invention, plant milk derived from beans is preferably selected and used from the viewpoint of being less likely to impart an odd taste. Examples of the plant milk derived from beans include soy milk.

When the plant milk derived from beans is used, the cheese-like food preferably contains 0.1 to 2.0% by mass of the plant milk derived from beans in terms of the solid content. The plant milk derived from beans may be derived from high-carbohydrate beans or low-carbohydrate beans.

### - Swelling-inhibiting starch -

Next, the swelling-inhibiting starch used in the cheese-like food of the present invention will be described.

In the present invention, the term "swelling-inhibiting starch" refers to a processed starch that has been subjected to a treatment such as a cross-linking treatment, an aging treatment, a moist heat treatment, an emulsifier treatment, or the like, thereby inhibiting swelling that is normally caused when the starch is heated.

The swelling-inhibiting starch used in the present invention is selected from those with the swelling properties during heating being suppressed as compared to a raw material starch to be described later. This suppression is a result of performing one or two or more treatments on the raw material starch. These treatments are selected from, for example, a physical treatment such as an aging treatment, a bleaching treatment, and a moist heat treatment, a chemical treatment such as esterification, etherification, acetylation, a cross-linking treatment, and an emulsifier treatment, and an enzymatic treatment.

It is noted that two or more types of swelling-inhibiting starches obtained by different treatments and swelling-inhibiting starches obtained by the same treatment but having different degrees of treatment may be used in combination.

In the cheese-like food of the present invention, from the viewpoint of obtaining a smoother texture when used in combination with high-carbohydrate beans, it is preferable that the swelling-inhibiting starch to be contained may be subjected to at least a cross-linking treatment, more preferably to a phosphoric acid cross-linking treatment. The swelling-inhibiting starch is particularly preferably a hydroxypropylated phosphoric acid cross-linked starch.

The type of the raw material starch for the swelling-inhibiting starch used in the present invention is not particularly limited, and examples thereof include starches derived from waxy corn, corn, tapioca, wheat, sweet potato, potato, sago, rice, and the like. As these raw material starches, one type thereof may be solely used, and two or more types thereof may also be used in combination.

In the cheese-like food of the present invention, from the viewpoint that stringiness will not be imparted and a smooth texture can be imparted to the obtained cheese-like food, it is preferable to use a combination of a swelling-inhibiting starch derived from waxy corn and a swelling-inhibiting starch derived from corn.

When the swelling-inhibiting starch derived from waxy corn and the swelling-inhibiting starch derived from corn are used in combination, the content of the swelling-inhibiting starch derived from corn in the cheese-like food of the present invention is preferably 0.5 to 5 parts by mass, more preferably 1 to 4 parts by mass, and particularly preferably 1.5 to 3 parts by mass, relative to 1 part by mass of the swelling-inhibiting starch derived from waxy corn. When the ratio of the content of the swelling-inhibiting starch derived from waxy corn to the content of the swelling-inhibiting starch derived from corn falls within the above-described range, it facilitates imparting a smooth texture and not imparting stringiness to the obtained cheese-like food.

Next, the content of the swelling-inhibiting starch in the cheese-like food of the present invention will be described.

The content of the swelling-inhibiting starch in the cheese-like food of the present invention is 1 to 10% by mass.

When the content of the swelling-inhibiting starch in the cheese-like food of the present invention is less than 1% by mass, the shape retention property is deteriorated. On the other hand, when the content exceeds 10% by mass, the texture becomes pasty and sticky, and it becomes impossible to obtain a smooth texture.

The content of the swelling-inhibiting starch in the cheese-like food of the present invention is 1 to 10% by mass from the viewpoint that the cheese-like food does not have a pasty and sticky texture and a smooth texture can be obtained. The lower limit thereof is preferably 2% by mass or more or 2.5% by mass or more, more preferably 3% by mass or more or 3.5% by mass or more, and the upper limit thereof is preferably 8% by mass or less, more preferably 7% by mass or less, 6.5% by mass or less, or 6% by mass or less. Therefore, in one embodiment, the content of the swelling-inhibiting starch in the cheese-like food of the present invention is preferably 2 to 8% by mass, particularly preferably 3 to 7% by mass.

### - pH -

The pH of the cheese-like food of the present invention is 3.5 to 7.5 from the viewpoint of suppressing odd taste and obtaining a refreshing sour taste.

The upper limit of the pH of the cheese-like food of the present invention is preferably 7 or less or 6.5 or less, more preferably 6 or less or 5.5 or less, still more preferably 5 or less or 4.5 or less, from the viewpoint of further suppressing the odd taste and obtaining a more refreshing sour taste like cheese. Accordingly, in one embodiment, the pH of the cheese-like food of the present invention is more preferably 3.5 to 6.5, particularly preferably 3.5 to 5.5.

As a method for adjusting the pH of the cheese-like food, for example, a method of adding an organic acid, a method of performing lactic acid fermentation, and the like can be exemplified. From the viewpoint of easily adjusting the pH, a method for adjusting the pH by adding an organic acid is preferable.

The organic acid is not particularly limited as long as it is an organic acid that can be used in foods. Examples thereof include organic acids such as adipic acid, citric acid, gluconic acid, succinic acid, acetic acid, tartaric acid, lactic acid, fumaric acid, malic acid, phosphoric acid, and phytic acid, and food materials containing these organic acids. As these organic acids, one type thereof may be solely used, and two or more types thereof may also be used in combination. From the viewpoint of being able to impart a refreshing sour taste like cheese to the cheese-like food, the organic acid is preferably one or two or more organic acids selected from the group consisting of citric acid, acetic acid, lactic acid, and malic acid.

The pH of the cheese-like food of the present invention can be measured by conventionally known methods. For example, a pH can be measured by piercing, with a pH measuring instrument such as a needle-type pH measuring instrument, a cheese-like food that has been temperature-adjusted to be at room temperature (20 to 30°C).

### - Water -

Next, water in the cheese-like food of the present invention will be described.

The water content in the cheese-like food of the present invention is 45 to 70% by mass. When the water content falls within this range, a cheese-like food having excellent shape retention properties, and good smoothness and emulsion stability can be obtained.

When the water content is less than 45% by mass, the resulting cheese-like food is hard, and a smooth texture cannot be obtained. On the other hand, when the water content exceeds 70% by mass, the cheese-like food becomes excessively soft and has poor shape retention properties, and furthermore, the emulsion stability deteriorates.

The water content in the cheese-like food of the present invention is 45 to 70% by mass in the cheese-like food from the viewpoint of obtaining a smooth texture like cream cheese, which is one preferred embodiment. The lower limit thereof is preferably 47% by mass or more or 48% by mass or more, more preferably 52% by mass or more, 54% by mass or more, or 55% by mass or more, and the upper limit thereof is preferably 67% by mass or less, more preferably 65% by mass or less,. Accordingly, in one embodiment, the water content in the cheese-like food of the present invention is preferably 47 to 67% by mass, particularly preferably 50 to 65% by mass.

The water that can be used for producing the cheese-like food of the present invention is not particularly limited, and examples thereof include tap water and mineral water.

The water content is the total amount of water used in the production of the cheese-like food of the present invention, water contained in the high-carbohydrate beans and the swelling-inhibiting starch, and water contained in other raw materials which will be described later.

### - Emulsification form -

Next, the emulsification form of the cheese-like food of the present invention will be described.

The cheese-like food of the present invention includes an emulsion composition having an aqueous phase and an oil phase. The emulsification form is not particularly limited, and may be a water-in-oil type, an oil-in-water type, or a double-emulsified type such as an oil-in-water-in-oil type. The emulsification form is preferably an oil-in-water type from the viewpoint of obtaining a cheese-like food having a smooth texture like cheese.

### - Oil -

Next, the oil in the cheese-like food of the present invention will be described.

From the viewpoint of obtaining a cheese-like food that has better shape retention properties, a smooth texture and an improved emulsion stability, the lower limit of the oil content in the cheese-like food of the present invention is preferably 10% by mass or more, more preferably 12% by mass or more or 14% by mass or more, more preferably 15% by mass or more, 16% by mass or more, 18% by mass or more or 20% by mass or more, and the upper limit thereof is preferably 53% by mass or less, more preferably 50% by mass or less or 45% by mass or less, more preferably 40% by mass or less, 38% by mass or less or 36% by mass or less. Accordingly, in one embodiment, the cheese-like food of the present invention preferably has an oil content of 10 to 53% by mass, more preferably 12 to 50% by mass, particularly preferably 15 to 40% by mass.

The oil content is also the total amount of the fat and oil used in the production of the cheese-like food, the oil contained in the high-carbohydrate beans and the swelling-inhibiting starch, and the fat and oil contained in the other raw materials described later.

Next, fats and oils used in the production of the cheese-like food of the present invention will be described.

From the viewpoint of preferably satisfying the above-mentioned oil content, the cheese-like food of the present invention preferably contains fats and oils during its production.

There is no particular limitation on the fat and oil used in the production of the cheese-like food of the present invention. Examples thereof include vegetable fats and oils such as a palm oil, a palm kernel oil, a coconut oil, a corn oil, a cottonseed oil, a soybean oil, a rapeseed oil, a high erucic acid rapeseed oil, a rice oil, a sesame oil, a peanut oil, a sunflower oil, a high oleic sunflower oil, a safflower oil, a high oleic safflower oil, a canola oil, a kapok oil, an evening primrose oil, an olive oil, a shea butter, a sal fat, Kokum butter, illipe butter, and cacao butter; animal fats and oils such as milk fat, beef tallow, pork fat, and whale oil; and processed fats and oils obtained by subjecting any of these vegetable fats and oils and animal fats and oils to one or two or more treatments selected from hydrogenation, fractionation, and interesterification. As these fats and oils, one type thereof may be solely used, and two or more types thereof may also be used in combination.

In the cheese-like food of the present invention, preferably 90% by mass or more, more preferably 95% by mass or more, of the fat and oil contained therein include a vegetable fat and oil and a processed fat and oil derived from a vegetable fat and oil. Among these, it is particularly preferable that all the fats and oils contained therein include a vegetable fat and oil and a processed fat and oil derived from a vegetable fat and oil.

### [Fat and oil A]

From the viewpoint of obtaining a cheese-like food having good shape retention properties and a smooth texture, the cheese-like food of the present invention preferably contains a fat and oil (hereinafter, simply referred to as "fat and oil A") containing 10% by mass or more of lauric acid residue and less than 3% by mass of behenic acid residue in the constituent fatty acid residues.

The content of the lauric acid residue in the constituent fatty acid residues of the fat and oil A is more preferably 15% by mass or more, still more preferably 20% by mass or more. The upper limit of the content of the lauric acid residue is preferably 70% by mass or less, more preferably 60% by mass or less, in the constituent fatty acid residue.

The content of behenic acid residue in the constituent fatty acid residues of the fat and oil A is more preferably 2.5% by mass or less, still more preferably 1.5% by mass or less, particularly preferably 1.0% by mass or less. The lower limit value of the content of the behenic acid residue is 0% by mass.

Examples of the fat and oil A used in the present invention include the following (1) to (3):
(1) A lauric fat and oil such as a palm kernel oil and a coconut oil;
(2) A processed fat and oil obtained by subjecting a fat and oil mixture to one or two or more treatments selected from hydrogenation, fractionation, and interesterification, with the fat and oil mixture containing one or more types of fats and oils out of those in (1) in a total amount of 65% by mass or less and a fat and oil other than those in (1) in such an amount that a summed total of the amount thereof becomes 100% by mass; and
(3) A processed fat and oil obtained by subjecting a fat and oil mixture to one or two or more treatments selected from hydrogenation, fractionation, and interesterification, with the fat and oil mixture containing one or more types of fats and oils out of those in (1) in a total amount exceeding 65% by mass and a fat and oil other than those in (1) in such an amount that a summed total of the amount thereof becomes 100% by mass.

It is noted that the fat and oil A corresponding to the above-described (3) includes a processed fat and oil obtained by subjecting a single fat and oil of (1) or a fat and oil mixture consisting only of two or more types of fats and oils of (1) to one or two or more treatments selected from hydrogenation, fractionation, and interesterification.

As the fat and oil A, one type thereof may be solely used, and two or more types thereof may also be used in combination. From the viewpoint of improving the emulsion stability of the cheese-like food of the present invention, the cheese-like food preferably contains at least one or more types of fats and oils A which are interesterified fats and oils.

When at least one or more types of the interesterified fats and oils A are contained, the cheese-like food preferably contains at least one or more types of the interesterified fats and oils corresponding to the above-described (2), and in particular, preferably contains at least one or more types of fats and oils corresponding to the following interesterified fats and oils A'.

Interesterified Fat and oil A': An interesterified fat and oil obtained by interesterifying a fat and oil mixture including 30 to 65% by mass of a fat and oil containing 30 to 70% by mass of lauric acid residue in constituent fatty acid residues and a palm-based fat and oil in such an amount that a summed total of the amount thereof becomes 100% by mass.

The amount of the fat and oil containing 30 to 70% by mass of the lauric acid residue in the constituent fatty acid residues used for obtaining the interesterified fat and oil A' is preferably 35 to 65% by mass, more preferably 40 to 65% by mass.

The palm-based fat and oil refers to a palm oil, a palm fractionated soft part oil, a palm fractionated hard part oil, and processed fats and oils obtained by subjecting these fats and oils to one or two or more treatments selected from hydrogenation, fractionation, and interesterification. Among these, a palm-based fat and oil containing 35% by mass or more of palmitic acid residue in the constituent fatty acid residues is preferable. A palm-based fat and oil containing 30 to 60% by mass of stearic acid residue in the constituent fatty acid residues is more preferable. Examples of the palm-based fats and oils that preferably satisfy the conditions related to the fatty acid residues in the constituent fatty acid residues include a fully hydrogenated palm oil.

The method of the interesterification reaction for obtaining the interesterified fat and oil A' described above is not particularly limited. Examples thereof include a method involving interesterification reaction using an enzyme such as lipase, and a method involving interesterification reaction using a chemical catalyst such as sodium methoxide. These interesterification reactions may be a random interesterification reaction or a selective interesterification reaction, and from the viewpoint of making the triglyceride composition more complicated, it is preferable to obtain the above-described interesterified fat and oil with the random interesterification reaction.

The interesterified fat and oil A' preferably contains the lauric acid residue in the constituent fatty acid residues in an amount of 10 to 45% by mass, more preferably 12 to 40% by mass, still more preferably 15 to 30% by mass.

In the cheese-like food of the present invention, when the fat and oil A described above is used as the fat and oil, the fat and oil A is preferably contained in an amount of 30 to 100% by mass, more preferably 50 to 100% by mass, still more preferably 70 to 100% by mass, in the fat and oil contained in the cheese-like food.

In particular, in the cheese-like food of the present invention, when the interesterified fat and oil A' is used as the fat and oil, the interesterified fat and oil A' is preferably contained in an amount of 2 to 85% by mass, preferably 4 to 70% by mass, in the fat and oil contained in the cheese-like food.

In the case where two or more types of fats and oils corresponding to the fat and oil A are contained, the total amount thereof is defined as the content of the fat and oil A. When two or more types of fats and oils corresponding to the interesterified fat and oil A' are contained, the total amount thereof is defined as the content of the interesterified fat and oil A'.

### [Fat and oil B]

Furthermore, the cheese-like food of the present invention preferably contains, in addition to the above-mentioned fat and oil A, a fat and oil (hereinafter, also simply referred to as "fat and oil B") containing 3 to 50% by mass of behenic acid residue in the constituent fatty acid residues, from the viewpoint of imparting a rich taste to the cheese-like food to improve its taste. The content of the behenic acid residue in the constituent fatty acid residues of the fat and oil B is more preferably 5 to 20% by mass, still more preferably 5 to 15% by mass.

Examples of the fat and oil B include a fully hydrogenated fish oil, a fully hydrogenated high erucic acid rapeseed oil, and fats and oils obtained by interesterifying mixed fats and oils that contain 3 to 50% by mass of behenic acid residue in the constituent fatty acid residues and that are obtained by mixing these fats and oils with other vegetable fats and oils or animal fats and oils. As the fats and oils B, one type thereof may be solely used, and two or more types thereof may also be used in combination.

Examples of the fat and oil B that can be preferably used in the present invention include fats and oils obtained by randomly interesterifying a mixed fat and oil of 10 to 30% by mass of a high erucic acid rapeseed oil and 70 to 90% by mass of a palm fractionated soft oil.

In the cheese-like food of the present invention, from the viewpoint of imparting a rich taste to the cheese-like food to improve its taste, when the fat and oil B is to be contained, the content thereof is preferably 2 to 10% by mass, more preferably 3 to 7% by mass, in the fat and oil contained in the cheese-like food.

### [Fat and oil C]

The fat and oil A can be hydrolyzed in an environment having a high water content. Therefore, when long-term storage is required or when the content of the fat and oil in the cheese-like food is large, it is preferable to use an interesterified fat and oil of a palm fractionated soft part oil (hereinafter, also simply referred to as "fat and oil C") instead of, or in addition to, the fat and oil A from the viewpoint of improving the emulsion stability.

The fat and oil C can be obtained by interesterification of a fat and oil blend consisting only of one or two or more types of palm fractionated soft part oils.

Examples of the palm fractionated soft part oil used for obtaining the fat and oil C include palm olein, which is a low melting point fraction obtained by fractionating palm oil, and palm superolein, which is a low melting point fraction obtained by further fractionating palm olein. Among these, one or two or more types selected from these may be used.

From the viewpoint of obtaining the cheese-like food of the present invention that tends to have a better texture, the fat and oil C preferably has an iodine value of 52 to 70, more preferably 55 to 70, still more preferably 60 to 70.

The iodine value of a fat and oil in the present invention can be measured by conventionally known methods, and, for example, can be measured by the method described in "2.3.4.1 (2013) of Standard Methods for the Analysis of Fats, Oils and Related Materials established by Japan Oil Chemists' Society".

In the cheese-like food of the present invention, when the fat and oil C described above is used as the fat and oil, the fat and oil C is preferably contained in an amount of 30 to 100% by mass, more preferably 50 to 100% by mass, still more preferably 70 to 100% by mass, in the fat and oil contained in the cheese-like food.

In the cheese-like food of the present invention, the fat and oil A and the fat and oil C may be used in combination as the fat and oil. In this case, it is preferable that the fat and oil contained in the cheese-like food of the present invention includes 5 to 95% by mass of the fat and oil A and 5 to 95% by mass of the fat and oil C, and more preferably 20 to 95% by mass of the fat and oil A and 5 to 80% by mass of the fat and oil C.

Preferred fat and oil blends in the cheese-like food of the present invention include, for example, the following.

As one preferable embodiment of the fat and oil blend in the cheese-like food of the present invention, there can be exemplified a fat and oil blend containing 65 to 95% by mass of the fat and oil A corresponding to the above-described (3), 3 to 20% by mass of the interesterified fat and oil A', and 1 to 10% by mass of the fat and oil B in the fat and oil contained in the cheese-like food.

In addition, as another preferable embodiment of the fat and oil blend in the cheese-like food of the present invention, there can be exemplified a fat and oil blend containing 30 to 97% by mass of the fat and oil A corresponding to the above-described (1) and 3 to 70% by mass of the interesterified fat and oil A' in the fat and oil contained in the cheese-like food.

Still further, as another preferable embodiment of the fat and oil blend in the cheese-like food of the present invention, there can be exemplified a fat and oil blend containing 70 to 100% by mass of the fat and oil C in the fat and oil contained in the cheese-like food.

In the present invention, from the viewpoint of making the texture of the cheese-like food smoother, the content of trilaurin in the constituent triglycerides of the oil phase of the cheese-like food of the present invention is preferably 25% by mass or less, more preferably 20% by mass or less. The lower limit value of the content of trilaurin in the constituent triglycerides of the oil phase is 0% by mass.

The content of trilaurin in the constituent triglycerides of the oil phase of the cheese-like food can be measured by conventionally known methods, for example, by using the method described in "2.4.6.2 (2013) of Standard Methods for the Analysis of Fats, Oils and Related Materials established by Japan Oil Chemists' Society" in combination with the silver ion-high performance liquid chromatography method.

It is preferable that the cheese-like food of the present invention contains substantially no trans fatty acids. In the present invention, "containing substantially no trans fatty acid" means that the content of trans fatty acid residues in the constituent fatty acid residues of the oil phase of the cheese-like food of the present invention is less than 2% by mass. The content of the trans fatty acid residues in the constituent fatty acid residues of the oil phase of the cheese-like food of the present invention is the total amount of the trans fatty acid residues contained in the fat and oil used in the present invention and in the fat and oil contained in raw materials other than the fat and oil.

The content of each fatty acid residue of the fat and oil used in the present invention can be measured using various conventionally known methods, and can be measured by, for example, the method described in 2.4.2.2 (1996) of Standard Methods for the Analysis of Fats, Oils and Related Materials established by Japan Oil Chemists' Society.

In the cheese-like food of the present invention, the oil phase of the cheese-like food of the present invention has a solid fat content (SFC) at 20°C of preferably 12 to 75%, more preferably 20 to 75%, still more preferably 30 to 70%, particularly preferably 35 to 70%, from the viewpoint of providing a favorable melt-in-the-mouth feeling and a better, smoother texture.

The SFC at 30°C is preferably 2 to 50%, more preferably 4 to 48%, particularly preferably 6 to 45%.

The difference in SFC between 20°C and 30°C is preferably 5% or more, more preferably 10% or more, still more preferably 15% or more.

In measuring SFC in the present invention, any method may be used, such as a method of obtaining SFC by using a change in specific volume due to thermal expansion of a fat and oil, or a method of obtaining SFC by using nuclear magnetic resonance (NMR). For example, SFCs can be measured by the method described in 2.2.9 (2013) of Standard Methods for the Analysis of Fats, Oils and Related Materials established by Japan Oil Chemists' Society using a solid fat content measuring device "SFC-2000R" manufactured by ASTEC Co., Ltd.

### - Protein -

Next, the protein in the cheese-like food of the present invention will be described.

The content of the protein in the cheese-like food of the present invention is preferably 0.1 to 12.0% by mass, more preferably 0.3 to 6.0% by mass, still more preferably 0.5 to 3.0% by mass, in the cheese-like food.

The content of the protein is the total amount of the protein contained in the above-described high-carbohydrate beans and swelling-inhibiting starch, and the protein contained in the other raw materials described later.

In the cheese-like food of the present invention, when the content of the protein falls within the above-described range, it facilitates obtaining a cheese-like food that achieves both high emulsion stability and smooth texture.

### - Ash -

Next, the ash composition in the cheese-like food of the present invention will be described.

The cheese-like food of the present invention preferably has a mass ratio (Na/K), which is the ratio between the contents of sodium (Na) and potassium (K) contained in the cheese-like food of the present invention, of 2.5 to 4.0. This range is preferable because the resulting cheese-like food of the present invention has a taste similar to cream cheese, which is one preferred embodiment. The lower limit thereof is more preferably 2.6 or more or 2.8 or more, still more preferably 3.0 or more, 3.1 or more or 3.2 or more, and the upper limit thereof is more preferably 3.9 or less, still more preferably 3.8 or less. Thus, in a particularly preferred embodiment, the mass ratio (Na/K), which is the ratio between the contents of sodium (Na) and potassium (K) contained in the cheese-like food of the present invention, is 3.0 to 3.8.

The above-described contents of sodium and potassium are the respective total amounts of sodium and potassium contained in the raw materials used in the cheese-like food of the present invention.

In the present invention, among other raw materials to be described later, it is preferable to use food raw materials having a high ash content in their nutritional component, such as a salting agent like common salt or potassium chloride, and bittern to adjust the ash composition in the cheese-like food.

As the method for measuring the contents of sodium and potassium in the cheese-like food of the present invention, a conventionally known method for measuring the contents of sodium and potassium in foods can be used. For example, it can be measured using atomic absorption spectroscopy.

Herein, the cheese-like food of the present invention is preferably a plant cheese-like food.

In the present invention, the "plant cheese-like food" is a cheese-like food in which the content of an animal-derived material is 10% by mass or less, preferably 5% by mass or less, more preferably 3% by mass or less, in the cheese-like food. The lower limit value of the content of the animal-derived material in the cheese-like food of the present invention is 0% by mass.

Examples of the animal-derived material include food ingredients obtained from animals, such as animal meat, animal fat and oil, milk, egg, and skin, materials obtained by processing the food ingredients obtained from animals, such as an animal protein, an animal peptide, an egg yolk lecithin, a skimmed milk powder, collagen, and gelatin, and components derived from animals. The animal-derived material includes raw materials containing the food ingredients obtained from animals, the materials obtained by processing the food ingredients obtained from animals, or the components derived from animals.

Examples of the plant material include: food ingredients obtained from plants including cereals, beans, seeds, nuts, fruits and vegetables, such as a seed, a fruit, a leaf, a stem, a root, a vegetable fat and oil, and plant milk; materials obtained by processing the food ingredients obtained from plants, such as a plant protein, a plant peptide, a starch, a plant lecithin, a dietary fiber and an agar; and components derived from plants. The plant material includes raw materials that do not contain an animal-derived material and contain the food ingredients obtained from plants, the materials obtained by processing the food ingredients obtained from plants, or the component derived from plants.

The cheese-like food of the present invention is more preferably a pure plant cheese-like food in which the content of the animal-derived material in the cheese-like food is 0.1% by mass or less.

### - Other raw materials -

Next, other raw materials contained in the cheese-like food of the present invention will be described.

The cheese-like food of the present invention may contain other raw materials than those described above.

Examples of the other raw materials include food raw materials and food additives, such as starches, sugars, a sugar alcohol, a high-intensity sweetener, a salting agent such as common salt and potassium chloride, an acidulant such as acetic acid, lactic acid and citric acid, a pH adjuster, a seasoning, a spice, a thickening stabilizer, an emulsifier, a coloring agent such as β-carotene and caramel, a flavoring agent, an antioxidant such as tocopherol, a food preservative, a shelf life enhancer, a protein raw material other than beans, fruits and vegetables and fruit pulps and fruit juices, a fruit, seeds, grains, animal milk and products derived from animal milk, plant milk other than those derived from beans, coffee, cacao mass, cocoa powder, and alcoholic beverages such as wine. As these other raw materials, one type thereof may be solely used, and two or more types thereof may also be used in combination.

Examples of the starches include unprocessed starches derived from corn, waxy corn, tapioca, wheat, sweet potato, potato, sago and rice, and processed starches other than the swelling-inhibiting starch.

In the present invention, it is preferable not to use an oxidized starch, when starches are contained, from the viewpoint of suppressing the hard physical properties and the difficulty of obtaining a smooth texture.

The oxidized starch in the present invention is a processed starch obtained by oxidizing an unprocessed starch with sodium hypochlorite or the like.

Examples of the above-described sugars include monosaccharides, disaccharides, polysaccharides and oligosaccharides, such as superfine sugar, soft brown sugar, sucrose, glucose, fructose, lactose, granulated sugar, non-centrifugal sugar, brown sugar, maltose, beat sugar, cane sugar, powdered sugar, liquid sugar, isomerized sugar, invert sugar, enzyme-saccharified syrup, isomerized syrup, sucrose-bound syrup, fructooligosaccharide, soybean oligosaccharide, galactooligosaccharide, lactosucrose, xylose, trehalose, raffinose, lactulose, and palatinose oligosaccharide.

In the present invention, from the viewpoint of improving, in particular among the effects of the present invention, the emulsion stability and texture and also imparting freezing resistance and heat resistance to the cheese-like food of the present invention, the cheese-like food preferably contains one or two or more types selected from monosaccharides and disaccharides as sugars, more preferably contains one or two or more types selected from disaccharides, and further preferably contains trehalose.

When the cheese-like food of the present invention contains sugars, the content thereof is preferably 3 to 15% by mass, more preferably 5 to 15% by mass, in the cheese-like food as a solid content.

Examples of the sugar alcohols include sorbitol, xylitol, maltitol, erythritol, mannitol, lactitol, reduced malt sugar syrup, reduced lactose, and reduced sugar syrup.

Examples of the high-intensity sweetener include sodium saccharin, aspartame, acesulfame potassium, sucralose, stevia, neotame, licorice, glycyrrhizin, glycyrrhizinate, dihydrochalcone, thaumatin, and monellin.

Examples of the thickening stabilizer include guar gum, locust bean gum, carrageenan, gum arabic, alginic acids, pectin, xanthan gum, pullulan, tamarind seed gum, psyllium seed gum, crystalline cellulose, carboxymethylcellulose, methylcellulose, agar, and glucomannan.

Examples of the emulsifier include a glycerin fatty acid ester, a sucrose fatty acid ester, a sorbitan fatty acid ester, a propylene glycol fatty acid ester, a polyglycerin fatty acid ester, a polyglycerin condensed ricinoleic acid ester, calcium stearoyl lactate, sodium stearoyl lactate, a polyoxyethylene fatty acid ester, a polyoxyethylene sorbitan fatty acid ester, lecithin, and saponins.

Examples of the protein raw material other than the beans include protein raw materials obtained from plants other than beans, such as grains including wheat and barley, and seeds including almond, and protein raw materials obtained from animals, such as collagen gelatin obtained from animal skin, bone, and the like.

When a protein raw material other than the beans is used, the content of the protein raw material in the cheese-like food of the present invention is preferably 5% by mass or less, more preferably 3% by mass or less, as the solid content.

The plant milk other than those derived from beans is a liquid raw material having a turbid appearance like milk obtained by expressing plants other than beans, and examples thereof include almond milk, oat milk, coconut milk, and rice milk.

When the plant milk other than those derived from beans is used, the content thereof is preferably 0.05 to 1% by mass in the cheese-like food of the present invention as a solid content from the viewpoint of suppressing odd taste and improving its taste.

The content of the other raw materials in the cheese-like food of the present invention is preferably 25% by mass or less, more preferably 20% by mass or less, as the solid content.

### - Physical properties of cheese-like food -

Next, physical properties of the cheese-like food of the present invention will be described.

The cheese-like food of the present invention that preferably satisfies the above-described conditions exhibits a paste-like state or a solid state having plasticity at room temperature (20°C).

The hardness of the cheese-like food of the present invention can be optionally set according to the use method and the desired texture. From the viewpoint of obtaining a smooth texture like cream cheese, which is one of the preferred embodiments, the hardness at 5°C is preferably 100 to 2000 gf, more preferably 120 to 1500 gf, particularly preferably 150 to 1200 gf,.

The hardness at 5°C of the cheese-like food according to the present invention refers to the largest hardness measured by using a FUDOH rheometer RTC (manufactured by Rheotech Co., Ltd.). In this measurement, a FUDOH rheometer dedicated adapter (1) for measuring a card is inserted 10 mm at a table speed: 6 cm/min. into a cheese-like food that has been packed in a circular stainless steel cup with a diameter of 6 cm and a height of 5 cm and that has been temperature-controlled to be at 5°C for 1 week.

### [Method for producing cheese-like food]

Next, a method for producing the cheese-like food of the present invention will be described.

In one embodiment, the method for producing a cheese-like food of the present invention includes:
a step of mixing and emulsifying an oil phase containing beans (high-carbohydrate beans) containing 50 to 90% by mass of a carbohydrate in a solid content and an aqueous phase containing a swelling-inhibiting starch to obtain a preliminary emulsion (hereinafter, also referred to as a "preliminary emulsification step");
a step of adjusting a pH of the preliminary emulsion to be from 3.5 to 7.5 (hereinafter, also referred to as a "pH adjusting step");
a step of homogenizing the pH-adjusted preliminary emulsion to obtain an emulsion composition (hereinafter, also referred to as a "homogenization step"); and
a step of heat-sterilizing the obtained emulsion composition and then cooling it to 20°C or lower (hereinafter, also referred to as a "heat sterilization and cooling step").

Hereinafter, a preferred example of the method for producing a cheese-like food in the form of an oil-in-water type, which is a preferred embodiment of the present invention, will be described.

### - Preliminary emulsification step -

In the preliminary emulsification step, an oil phase containing high-carbohydrate beans and an aqueous phase containing a swelling-inhibiting starch are mixed and emulsified to obtain a preliminary emulsion.

Specifically, one type or two or more types of fats and oils are heated and melted followed by mixing. Then, high-carbohydrate beans and, as necessary, oil-soluble other raw materials are added, mixed, and dissolved to obtain an oil phase. In addition, water, swelling-inhibiting starch, and, as necessary, water-soluble other raw materials are heated and dissolved followed by mixing to obtain an aqueous phase. The oil phase is added to the resulting aqueous phase, mixed, and emulsified into an oil-in-water type to obtain a preliminary emulsion.

### - pH adjusting step -

In the pH adjusting step, the pH of the preliminary emulsion is adjusted to be from 3.5 to 7.5.

Examples of the method for adjusting the pH of the preliminary emulsion include a method of adding an organic acid, and a method of fermenting a mixture of raw materials of the cheese-like food of the present invention before emulsification, a preliminary emulsion or an emulsion composition with lactic acid bacteria. In the method for producing a cheese-like food according to the present invention, from the viewpoint of facilitating pH adjustment, a method of adding an organic acid to the preliminary emulsion to adjust the pH is preferred.

In the method for producing a cheese-like food according to the present invention, the preliminary emulsification step and the homogenization step, which will be described later, need to be performed in this order, but the pH adjusting step may be performed at any timing as long as it precedes the heat sterilization of the emulsion composition. For example, the pH adjusting step may be performed before the preliminary emulsification step, may be performed simultaneously with the preliminary emulsification step, may be performed before the homogenization step described later, or may be performed after the homogenization step. From the viewpoint of facilitating the pH adjustment, the pH adjusting step is preferably performed after the preliminary emulsification step and before or after the homogenization step.

### - Homogenization step -

In the homogenization step, the pH-adjusted preliminary emulsion is homogenized to obtain an emulsion composition.

The homogenization step can be performed using a homogenizer, such as a valve homogenizer, a homomixer, a colloid mill, or the like. In the homogenization step, the preliminary emulsion obtained as described above is homogenized by the homogenizer to obtain an emulsion composition, preferably an oil-in-water emulsion composition. The homogenization pressure is not particularly limited, and is preferably 0 to 200 MPa. When homogenization is performed using a two-stage homogenizer, for example, the first stage is preferably performed at 3 to 150 MPa and the second stage is preferably performed at 15 to 200 MPa.

### - Heat sterilization and cooling step -

In the heat sterilization and cooling step, the emulsion composition obtained by the homogenization as described above is heat-sterilized, and then cooled to 20°C or lower.

Heat-sterilization can be performed by heat sanitization treatment or heat sterilization treatment by UHT, HTST, batch-type, retort, microwave heating and the like using direct heating methods such as injection type and infusion type or using indirect heating methods such as plate-type, tubular type, and scraping type, or by heat cooking using direct fire or the like.
The heating temperature is preferably 60 to 130°C, and the heating time is preferably 0.05 to 30 minutes.
Furthermore, after heating, the resulting composition may be homogenized again as necessary.

Furthermore, cooling may be rapid cooling or slow cooling. In the present invention, rapid cooling refers to cooling at a cooling rate of 1.0°C/min or more, and slow cooling refers to cooling at a cooling rate of less than 1.0°C/min. In the present invention, slow cooling is preferred.

During the cooling part of the heat sterilization and cooling step, it is preferable to cool the composition to 20°C or lower, more preferably 15°C or lower, even more preferably 10°C or lower.

The cheese-like food of the present invention obtained in the manner described above can be optionally shaped into a block, bar, cylinder, dice, sheet, or spherical shape. Preferred sizes for each shape are: block shape with longitudinal dimension of 50 to 1000 mm, lateral dimension of 50 to 1000 mm, and thickness of 50 to 500 mm; bar shape with longitudinal dimension of 1 to 25 mm, lateral dimension of 1 to 25 mm, and length of 5 to 100 mm; cylindrical shape with diameter of 1 to 25 mm and length of 5 to 100 mm; dice shape with longitudinal dimension of 5 to 50 mm, lateral dimension of 5 to 50 mm, and thickness of 5 to 50 mm; sheet shape with longitudinal dimension of 50 to 1000 mm, lateral dimension of 50 to 1000 mm, and thickness of 1 to 50 mm; and spherical shape with diameter of 10 to 500 mm.

In addition, the cheese-like food of the present invention may be packed or packaged in a container, a bag, or the like with an optional shape.

### [Food product]

Various food products can be produced using the cheese-like food of the present invention. The present invention also provides such food products, i.e. food products made using the cheese-like food of the present invention.

The food product produced using the cheese-like food of the present invention is not particularly limited as long as the cheese-like food of the present invention is used in the production, and is preferably a bakery product, confectionery, or seasonings, more preferably a bakery product or seasonings.

For example, for a bakery product as a specific aspect for which the cheese-like food of the present invention is used, the cheese-like food can be used as a raw material for the bakery product, a material kneaded or folded into a bread dough or a baked confectionery dough, a filling, a cream, a topping, an ingredient, or the like. For confectionery, the cheese-like food can be used as a raw material for confectionery, a filling, a cream, a topping, or the like. For seasonings, the cheese-like food can be used to be mixed with, dressed with, applied to, or put on another seasoning, a food such as a vegetable, or a dish.

Examples of the bakery product include: bread products such as pullman loaf, croissant, French loaf, Danish pastry, pie, brioche, English muffin, muffin, bagel, nan, corone (Japanese sweet bread), butter-enriched roll, doughnut, curry-wrapped bread, melon-shaped sweet bread, cooked bread, pizza and steam meat bun; and baked confectionery such as cookie, biscuit, waffle, financier, madeleine, galette, tart, soufflé, bouchée, pound cake, pancake, baked cheesecake, no-baked cheesecake, roll cake, Castella, tiramisu, burned cream, langue de chat, wafer, macaron, cream puff, cracker, dorayaki (Japanese confectionery), manju (Japanese confectionery), senbei (Japanese confectionery), and okaki (Japanese confectionery).

Examples of the confectionery of the present invention include pudding, jelly, chocolate, candy, dango (Japanese confectionery), daifuku (Japanese confectionery), and frozen desserts such as ice cream.

Examples of the seasonings of the present invention include a substance to be put on or dressed with a dish or a food material, such as a dressing and a sauce, and a material to be added to a dish or a food material, such as a dipping sauce.

The food product produced using the cheese-like food of the present invention may or may not contain the animal-derived material as a raw material other than the cheese-like food.

The bread dough and baked confectionery dough for the bakery product produced using the cheese-like food of the present invention can be obtained in the same manner as a general method for producing a bread dough or baked confectionery dough. For example, the bread dough and baked confectionery dough can be obtained by kneading a starch, a fat and oil, water, and the like.

Examples of the starch usable in the production of the bread dough and baked confectionery dough include: wheat flours such as hard wheat flour, semi-hard wheat flour, medium-hard wheat flour, soft wheat flour, durum flour, whole wheat flour and germ; other cereal flours such as rye flour, barley flour and rice flour; nut powders such as almond powder, hazelnut powder, cashew nut powder, walnut powder and pine nut powder; starches such as a corn starch, a tapioca starch, a wheat starch, a sweet potato starch, a sago starch and a rice starch; and processed starches obtained by subjecting the starches to one or more selected from an enzymatic treatment, a gelatinization treatment, a decomposition treatment, an etherification treatment, an esterification treatment, a cross-linking treatment and a grafting treatment.

Examples of fats and oils usable in the production of the bread dough and baked confectionery dough include vegetable fats and oils such as a palm oil, a palm kernel oil, a coconut oil, a corn oil, a cottonseed oil, a soybean oil, a rapeseed oil, a high erucic acid rapeseed oil, a rice oil, a sesame oil, a peanut oil, a sunflower oil, a high oleic sunflower oil, a safflower oil, a high oleic safflower oil, a canola oil, an olive oil, a kapok oil, an evening primrose oil, a shea butter, a sal fat, Kokum butter, illipe butter and cacao butter; animal fats and oils such as milk fat, beef tallow, pork fat and whale oil; and processed fats and oils obtained by subjecting any of these vegetable fats and oils and animal fats and oils to one or two or more treatments selected from hydrogenation, fractionation, and interesterification. It is also possible to use fat and oil compositions such as margarine, shortening and butter.

Water usable in the production of the bread dough and the baked confectionery dough is not particularly limited, and examples thereof include natural water and tap water.

In the production of the bread dough and baked confectionery dough, if necessary, other raw materials used as general bread-making materials or confectionery-making materials can be used. Examples of the other raw materials include an emulsifier, yeast, eggs such as whole egg, egg yolk and egg white, a thickening stabilizer, sugars, sugar alcohols, a high-intensity sweetener, a colorant such as β-carotene, caramel and Monascus pigment, an antioxidant such as tocopherol and a tea extract, dextrin, milk and dairy products, plant milk, cheeses and cheese-like foods such as natural cheese, processed cheese and a cheese food, alcohols and alcoholic beverages, a blowing agent, inorganic salts, common salt, a baking powder, a yeast food, a dough modifier, cacao and cacao products, coffee and coffee products, herbs, beans, a protein raw material, a preservative, a bitter, an acidulant, a pH adjustor, a shelf-life improver, an enzyme, a fruit, a fruit juice, a jam, a fruit sauce, a seasoning, a spice, a perfume, food ingredients such as vegetables, meats, and fish and shellfish, plant and animal extracts such as consomm and bouillon, and a food additive. One type of the other raw material may be solely used, and two or more types thereof may also be used in combination.

The bread dough and baked confectionery dough can be produced by a method appropriately selected from a general method for making a bread dough such as a sponge-dough method, a straight dough method, a poolish method, a soaker dough method or a water roux method, and a general method for making a baked confectionery dough such as a sugar batter method, a flour batter method, an all-in-mix method, a drawn butter method, a separate foaming method, a method in which a flour is blended later, a method in which a fat and oil is blended later or a hot mixing method. In addition, floor time, dividing, bench time, making-up, proofing (secondary fermentation), and the like may be performed.

The bakery product produced using the cheese-like food of the present invention is obtained by subjecting the bread dough and baked confectionery dough to a heating treatment. The heating treatment is not particularly limited, and examples thereof include baking the bread dough, frying the bread dough, steaming the bread dough, boiling the bread dough, and irradiating the bread dough with microwave in a microwave oven. The bakery product produced by the above-mentioned method can be refrigerated, cryopreserved, or stored and then reheated with a microwave oven, a toaster, or the like.

The confectionery obtained by using the cheese-like food of the present invention can be obtained in the same manner as the general method for producing each confectionery. For example, if it is a pudding, it can be obtained by heating a liquid obtained by mixing an egg and other raw materials; if it is a jelly, it can be obtained by solidifying a liquid obtained by mixing a gelling agent such as gelatin and other raw materials; if it is chocolate, it can be obtained by heating and melting vegetable fats and oils, animal fats and oils, cocoa butter, and the like, adding the other raw materials to the mixture, further mixing the mixture, and cooling the mixture, if necessary, through a tempering process, to solidify it; if it is a frozen confectionery, it can be obtained by mixing vegetable fats and oils, animal fats and oils, water, and other raw materials to produce an emulsion composition, and freezing the composition with a freezer or the like.

As for the confectionery obtained by using the cheese-like food of the present invention, other raw materials commonly used in each confectionery can be used, as necessary. Examples thereof include fats and oils such as vegetable fats and oils and animal fats and oils, a fat and oil composition such as cocoa butter, hard butter, margarine and shortening, water, an emulsifier, eggs such as whole egg, egg yolk and egg white, a thickening stabilizer, a gelling agent, sugars, sugar alcohols, a high-intensity sweetener, a starch and a processed starch, a colorant, an antioxidant, dextrin, milk and dairy products, plant milk, cheeses and cheese-like foods, alcohols and alcoholic beverages, a blowing agent, inorganic salts, common salt, a protein raw material, a preservative, a bitter, an acidulant, a pH adjustor, a shelf-life improver, a fruit, a fruit juice, a jam, a fruit sauce, a seasoning, a spice, a perfume, food ingredients such as vegetables, meats, and fish and shellfish, plant and animal extracts such as consomm and bouillon, and a food additive. As these other raw materials, one type thereof may be solely used, and two or more types thereof may also be used in combination.

The seasonings obtained by using the cheese-like food of the present invention can be obtained by the general method for producing each seasonings. Examples thereof include a method of obtaining a dressing or a dressing-like seasoning by emulsifying an oil phase or an aqueous phase containing the cheese-like food of the present invention or by mixing the cheese-like food of the present invention with an emulsion composition having an oil phase and an aqueous phase, and a method of obtaining a sauce or a dip sauce by mixing vegetables such as pickles and onions and ground seeds with the cheese-like food of the present invention or the melted cheese-like food of the present invention.

The seasonings obtained by using the cheese-like food of the present invention may or may not be emulsified. In addition, even when emulsified, the emulsion form is not particularly limited. The seasonings may be an oil-in-water type, a water-in-oil type, or a double emulsion type such as an oil-in-water-in-oil type.

The shape of the seasonings obtained by using the cheese-like food of the present invention is not particularly limited, and may be in a liquid state, a semisolid state such as a jelly state, a paste state or a mayonnaise state, or a solid state such as a gel state or a frozen state.

As for the seasonings obtained by using the cheese-like food of the present invention, other raw materials commonly used in each seasoning can be used, as necessary. Examples thereof include fats and oils such as vegetable fats and oils and animal fats and oils, water, an emulsifier, eggs such as whole egg, egg yolk and egg white, a thickening stabilizer, sugars, sugar alcohols, a high-intensity sweetener, a starch and a processed starch, a colorant, an antioxidant, dextrin, milk and dairy products, plant milk, cheeses and cheese-like food, alcohols and alcoholic beverages, a blowing agent, inorganic salts, common salt, a herb, beans, a protein raw material, a preservative, a bitter, an acidulant, a pH adjustor, a shelf-life improver, a fruit, a fruit juice, a jam, a fruit sauce, a seasoning, a spice, a perfume, food ingredients such as vegetables, meats, and fish and shellfish, plant and animal extracts such as consomm and bouillon, and a food additive. As these other raw materials, one type thereof may be solely used, and two or more types thereof may also be used in combination.

### Examples

Hereinafter, the present invention will be described in detail with reference to Examples. However, the present invention is not limited to the following examples.

### [Production of interesterified fat and oil (1)]

A interesterified fat and oil (1), which serves as the above-mentioned fat and oil A, was obtained by subjecting, to a random interesterification reaction using sodium methoxide as a catalyst, a fat and oil blend including 50% by mass of a palm kernel oil containing 50% by mass of lauric acid residue in the constituent fatty acid residues, and 50% by mass of a fully hydrogenated palm oil containing 44.6% by mass of palmitic acid residue and 53.6% by mass of stearic acid residue in the constituent fatty acid residues, and refining the resultant by a conventional common method. Here, the interesterified fat and oil (1) contained 24.2% by mass of lauric acid residue and 0% by mass of behenic acid residue in the constituent fatty acid residues, and 5.0% by mass of trilaurin in the constituent triglycerine.

### [Production of interesterified fat and oil (2)]

A interesterified fat and oil (2), which serves as the above-mentioned fat and oil A, was obtained by subjecting, to a random interesterification reaction using sodium methoxide as a catalyst, a fat and oil blend including 75% by mass of a palm kernel oil, and 25% by mass of a fully hydrogenated palm oil, and refining the resultant by a conventional common method. Here, the interesterified fat and oil (2) contained 34.1% by mass of lauric acid residue and 0% by mass of behenic acid residue in the constituent fatty acid residues, and 9.4% by mass of trilaurin in the constituent triglycerine.

### [Production of interesterified fat and oil (3)]

A interesterified fat and oil (3), which serves as the above-mentioned fat and oil B, was obtained by subjecting, to a random interesterification reaction using sodium methoxide as a catalyst, a fat and oil blend including 80% by mass of a palm fractionated soft part oil, and 20% by mass of a fully hydrogenated high erucic acid rapeseed oil containing 48% by mass of behenic acid residue in the constituent fatty acid residues, and refining the resultant by a conventional common method. Here, the interesterified fat and oil (3) contained 0.6% by mass of lauric acid residue and 8.3% by mass of behenic acid residue in the constituent fatty acid residues, and 0.4% by mass of trilaurin in the constituent triglycerine.

### [Production of interesterified fat and oil (4)]

A interesterified fat and oil (4), which serves as the above-mentioned fat and oil C, was obtained by subjecting, to a random interesterification reaction using sodium methoxide as a catalyst, a fat and oil blend including 100% by mass of a palm fractionated soft part oil with an iodine value of 64, and refining the resultant by a conventional common method. Here, the interesterified fat and oil (4) contained 0.5% by mass of lauric acid residue and 0% by mass of behenic acid residue in the constituent fatty acid residues, 0.2% by mass of trilaurin in the constituent triglycerine, and an iodine value of 64.

### [Coconut oil used in Examples of the present invention]

The coconut oil used in the examples of the present invention was a fat and oil that corresponds to the above-mentioned fat and oil A and that contains 50.3% by mass of lauric acid residue and 0% by mass of behenic acid residue in the constituent fatty acid residues, and 20.9% by mass of trilaurin in the constituent triglycerine.

### <Production of cheese-like food>

### [Example 1]

First, 16.2 parts by mass of the interesterified fat and oil (1) and 8.8 parts by mass of the interesterified fat and oil (2) were melted and mixed by heating at 60°C. The SFC of the oil phase at 20°C was 67.7% and the SFC at 30°C was 42.5%. To the mixture, 4 parts by mass of a powder of a chickpea (water content: 10% by mass, oil content: 5.2% by mass, carbohydrate: 68% by mass in solid content, protein: 22% by mass in solid content), 0.2 part by mass of a thickening stabilizer were added, and mixed by stirring to obtain an oil phase.

Next, 61 parts by mass of water was warmed to 60°C. Then, 1.5 parts by mass of a waxy corn-derived hydroxypropylated phosphoric acid cross-linked starch and 3 parts by mass of a corn-derived hydroxypropylated phosphoric acid cross-linked starch, which served as swelling-inhibiting starches, 1 part by mass of common salt, 0.2 part by mass of potassium chloride, and 4 parts by mass of sucrose were added thereto, and mixed by stirring to obtain an aqueous phase.

The above-mentioned oil phase was added to the above-mentioned aqueous phase, and mixed and emulsified to obtain an oil-in-water preliminary emulsion. To the obtained preliminary emulsion, 0.1 part by mass of lactic acid was added, and its pH was adjusted to be 4.4, followed by homogenization at a homogenization pressure of 15 MPa to obtain an oil-in-water emulsion composition. The obtained oil-in-water emulsion composition was heated at 120°C for 3 seconds using a direct-heating UHT sterilizer, and then slowly cooled to 4°C to obtain a cheese-like food (1) of the present invention having a water content of 61.4% by mass. The mass ratio (Na/K) between the contents of sodium and potassium in the cheese-like food (1) of the present invention was 3.6.

### [Example 2]

A cheese-like food (2) of the present invention having a water content of 63.2% by mass was obtained by the same manner as that of Example 1, except that the blending amount of the powder of chickpea was changed from 4 parts by mass to 2 parts by mass, and the blending amount of water was changed from 61 parts by mass to 63 parts by mass. The mass ratio between the contents of sodium and potassium of the cheese-like food (2) of the present invention was 3.9.

### [Example 3]

A cheese-like food (3) of the present invention having a water content of 57.8% by mass was obtained by the same manner as that of Example 1, except that the blending amount of the powder of chickpea was changed from 4 parts by mass to 8 parts by mass, and the blending amount of water was changed from 61 parts by mass to 57 parts by mass. The mass ratio between the contents of sodium and potassium of the cheese-like food (3) of the present invention was 3.2.

### [Example 4]

A cheese-like food (4) of the present invention having a water content of 63.9% by mass was obtained by the same manner as that of Example 1, except that the blending amount of the waxy corn-derived hydroxypropylated phosphoric acid cross-linked starch was changed from 1.5 parts by mass to 0.5 part by mass, the blending amount of the corn-derived hydroxypropylated phosphoric acid cross-linked starch was changed from 3 parts by mass to 1.5 parts by mass, and the blending amount of water was changed from 61 parts by mass to 63.5 parts by mass. The mass ratio between the contents of sodium and potassium of the cheese-like food (4) of the present invention was 3.6.

### [Example 5]

A cheese-like food (5) of the present invention having a water content of 58.4% by mass was obtained by the same manner as that of Example 1, except that the blending amount of the waxy corn-derived hydroxypropylated phosphoric acid cross-linked starch was changed from 1.5 parts by mass to 2.5 parts by mass, the blending amount of the corn-derived hydroxypropylated phosphoric acid cross-linked starch was changed from 3 parts by mass to 5 parts by mass, and the blending amount of water was changed from 61 parts by mass to 58 parts by mass. The mass ratio between the contents of sodium and potassium of the cheese-like food (5) of the present invention was 3.6.

### [Example 6]

A cheese-like food (6) of the present invention having a water content of 48.6% by mass was obtained by the same manner as that of Example 1, except that the blending amount of the interesterified fat and oil (1) was changed from 16.2 parts by mass to 22.7 parts by mass, the blending amount of the interesterified fat and oil (2) was changed from 8.8 parts by mass to 12.3 parts by mass, the blending amount of the powder of chickpea was changed from 4 parts by mass to 6 parts by mass, the blending amount of the corn-derived hydroxypropylated phosphoric acid cross-linked starch was changed from 3 parts by mass to 4 parts by mass, and the blending amount of water was changed from 61 parts by mass to 48 parts by mass. The mass ratio between the contents of sodium and potassium of the cheese-like food (6) of the present invention was 3.4.

### [Example 7]

A cheese-like food (7) of the present invention having a water content of 61.2% by mass was obtained by the same manner as that of Example 1, except that a powder of steamed chickpea (water content: 5% by mass, oil content: 7% by mass, carbohydrate: 68% by mass in solid content, protein: 21% by mass in solid content) was used instead of the powder of chickpea. The mass ratio between the contents of sodium and potassium of the cheese-like food (7) of the present invention was 3.6.

The above-mentioned powder of the steamed chickpea was produced by drying and pulverizing a chickpea that had been steamed under heating conditions satisfying a heating temperature of 60 to 130°C and a heating time of 10 seconds to 10 hours.

### [Example 8]

A cheese-like food (8) of the present invention having a water content of 61.5% by mass was obtained by the same manner as that of Example 1, except that a powder of a lentil (water content: 12% by mass, oil content: 1.5% by mass, carbohydrate: 69% by mass in solid content, protein: 26% by mass in solid content) was used instead of the powder of chickpea. The mass ratio between the contents of sodium and potassium of the cheese-like food (8) of the present invention was 3.0.

### [Example 9]

A cheese-like food (9) of the present invention having a water content of 61.2% by mass was obtained by the same manner as that of Example 1, except that the fat and oil blend that included 16.2 parts by mass of the interesterified fat and oil (1) and 8.8 parts by mass of the interesterified fat and oil (2) was changed to 25 parts by mass of coconut oil, and a powder of steamed chickpea was used instead of the powder of chickpea. The SFC of the oil phase of the cheese-like food (9) of the present invention at 20°C was 34.2% and the SFC at 30°C was 0.2%. The mass ratio between the contents of sodium and potassium of the cheese-like food (9) of the present invention was 3.6.

### [Example 10]

A cheese-like food (10) of the present invention having a water content of 61.2% by mass was obtained by the same manner as that of Example 1, except that the fat and oil blend that included 16.2 parts by mass of the interesterified fat and oil (1) and 8.8 parts by mass of the interesterified fat and oil (2) was changed to 21.3 parts by mass of coconut oil and 3.7 parts by mass of the interesterified fat and oil (1), and a powder of steamed chickpea was used instead of the powder of chickpea. The SFC of the oil phase of the cheese-like food (10) of the present invention at 20°C was 40.6% and the SFC at 30°C was 8.4%. The mass ratio between the contents of sodium and potassium of the cheese-like food (10) of the present invention was 3.6.

### [Example 11]

A cheese-like food (11) of the present invention having a water content of 61.2% by mass was obtained by the same manner as that of Example 1, except that the fat and oil blend that included 16.2 parts by mass of the interesterified fat and oil (1) and 8.8 parts by mass of the interesterified fat and oil (2) was changed to 25 parts by mass of the interesterified fat and oil (4), and a powder of steamed chickpea was used instead of the powder of chickpea. The SFC of the oil phase of the cheese-like food (11) of the present invention at 20°C was 13.7% and the SFC at 30°C was 6.0%. The mass ratio between the contents of sodium and potassium of the cheese-like food (11) of the present invention was 3.6.

### [Example 12]

A cheese-like food (12) of the present invention having a water content of 61.2% by mass was obtained by the same manner as that of Example 1, except that the fat and oil blend that included 16.2 parts by mass of the interesterified fat and oil (1) and 8.8 parts by mass of the interesterified fat and oil (2) was changed to 3.7 parts by mass of the interesterified fat and oil (4) and 21.3 parts by mass of coconut oil, and a powder of steamed chickpea was used instead of the powder of chickpea. The SFC of the oil phase of the cheese-like food (12) of the present invention at 20°C was 31.2% and the SFC at 30°C was 1.1%. The mass ratio between the contents of sodium and potassium of the cheese-like food (12) of the present invention was 3.6.

### [Example 13]

First, 1.2 parts by mass of the interesterified fat and oil (1), 22.6 parts by mass of the interesterified fat and oil (2), and 1.2 parts by mass of the interesterified fat and oil (3) were heated to 60°C and melted and mixed. The SFC of the oil phase at 20°C was 51.3% and the SFC at 30°C was 21.7%. To the mixture, 4 parts by mass of the powder of steamed chickpea and 0.2 part by mass of the thickening stabilizer were added, and mixed by stirring to obtain an oil phase.

Next, 55 parts by mass of water was warmed to 60°C. Then, 1.5 parts by mass of a waxy corn-derived hydroxypropylated phosphoric acid cross-linked starch and 3 parts by mass of a corn-derived hydroxypropylated phosphoric acid cross-linked starch, which served as swelling-inhibiting starches, 1.0 part by mass of common salt, 0.2 part by mass of potassium chloride, 2 parts by mass of sucrose, and 8 parts by mass of soymilk (water content: 91% by mass, oil content: 2% by mass, carbohydrate: 34.4% by mass in solid content, protein: 40% by mass in solid content) were added thereto, and mixed by stirring to obtain an aqueous phase.

The above-mentioned oil phase was added to the above-mentioned aqueous phase, and mixed and emulsified to obtain an oil-in-water preliminary emulsion. To the obtained preliminary emulsion, 0.1 part by mass of lactic acid was added, and its pH was adjusted to be 4.4, followed by homogenization at a homogenization pressure of 15 MPa to obtain an oil-in-water emulsion composition. The obtained oil-in-water emulsion composition was heated at 120°C for 3 seconds using a direct-heating UHT sterilizer, and then slowly cooled to 4°C to obtain a cheese-like food (13) of the present invention having a water content of 62.5% by mass. The mass ratio between the contents of sodium and potassium in the cheese-like food (13) of the present invention was 3.6.

### [Example 14]

A cheese-like food (14) of the present invention having a water content of 62.2% by mass was obtained by the same manner as that of Example 1, except that the fat and oil blend that included 16.2 parts by mass of the interesterified fat and oil (1) and 8.8 parts by mass of the interesterified fat and oil (2) was changed to 21.3 parts by mass of coconut oil and 3.7 parts by mass of the interesterified fat and oil (1), a powder of steamed chickpea was used instead of the powder of chickpea, 3 parts by mass of trehalose was used instead of 4 parts by mass of sucrose, and the blending amount of water was changed from 61 parts by mass to 62 parts by mass. The SFC of the oil phase of the cheese-like food (14) of the present invention at 20°C was 40.6% and the SFC at 30°C was 8.4%. The mass ratio between the contents of sodium and potassium of the cheese-like food (14) of the present invention was 3.6.

### [Example 15]

A cheese-like food (15) of the present invention having a water content of 55.2% by mass was obtained by the same manner as that of Example 1, except that the fat and oil blend that included 16.2 parts by mass of the interesterified fat and oil (1) and 8.8 parts by mass of the interesterified fat and oil (2) was changed to 21.3 parts by mass of coconut oil and 3.7 parts by mass of the interesterified fat and oil (1), a powder of steamed chickpea was used instead of the powder of chickpea, 10 parts by mass of trehalose was used instead of 4 parts by mass of sucrose, and the blending amount of water was changed from 61 parts by mass to 55 parts by mass. The SFC of the oil phase of the cheese-like food (15) of the present invention at 20°C was 40.6% and the SFC at 30°C was 8.4%. The mass ratio between the contents of sodium and potassium of the cheese-like food (15) of the present invention was 3.6.

### [Comparative Example 1]

A cheese-like food (A) having a water content of 61.2% by mass was obtained by the same manner as that of Example 1, except that a protein powder of chickpea (water content: 7% by mass, oil content: 22% by mass, carbohydrate: 5.4% by mass in solid content, protein: 67.7% by mass in solid content) separated from chickpea was used instead of the powder of chickpea. The mass ratio between the contents of sodium and potassium of the cheese-like food (A) of the present invention was 3.6.

### [Comparative Example 2]

A cheese-like food (B) having a water content of 61.2% by mass was obtained by the same manner as that of Example 1, except that a separated soy protein powder (water content: 6% by mass, oil content: 3% by mass, carbohydrate: 8.0% by mass in solid content, protein: 84.1% by mass in solid content) separated from soybeans was used instead of the powder of chickpea. The mass ratio between the contents of sodium and potassium of the cheese-like food (B) of the present invention was 4.3.

### [Comparative Example 3]

A cheese-like food (C) having a water content of 61.2% by mass was obtained by the same manner as that of Example 1, except that a separated garden pea protein powder (water content: 3.8% by mass, oil content: 8% by mass, carbohydrate: 3.6% by mass in solid content, protein: 81.8% by mass in solid content) separated from garden peas was used instead of the powder of chickpea. The mass ratio between the contents of sodium and potassium of the cheese-like food (C) of the present invention was 3.7.

### [Comparative Example 4]

A cheese-like food (D) having a water content of 54.2% by mass was obtained by the same manner as that of Example 1, except that the blending amount of the powder of chickpea was changed from 4 parts by mass to 12 parts by mass, and the blending amount of water was changed from 61 parts by mass to 53 parts by mass. The mass ratio between the contents of sodium and potassium of the cheese-like food (D) of the present invention was 3.2.

### [Comparative Example 5]

A cheese-like food (E) having a water content of 65.9% by mass was obtained by the same manner as that of Example 1, except that 1.5 parts by mass of the waxy corn-derived hydroxypropylated phosphoric acid cross-linked starch and 3 parts by mass of the corn-derived hydroxypropylated phosphoric acid cross-linked starch were not used, and the blending amount of water was changed from 61 parts by mass to 65.5 parts by mass. The mass ratio between the contents of sodium and potassium of the cheese-like food (E) of the present invention was 3.6.

### [Comparative Example 6]

A cheese-like food (F) having a water content of 53.9% by mass was obtained by the same manner as that of Example 1, except that the blending amount of the waxy corn-derived hydroxypropylated phosphoric acid cross-linked starch was changed from 1.5 parts by mass to 4 parts by mass, the blending amount of the corn-derived hydroxypropylated phosphoric acid cross-linked starch was changed from 3 parts by mass to 8 parts by mass, and the blending amount of water was changed from 61 parts by mass to 53.5 parts by mass. The mass ratio between the contents of sodium and potassium of the cheese-like food (F) of the present invention was 3.6.

### [Comparative Example 7]

A cheese-like food (G) having a water content of 74.4% by mass was obtained by the same manner as that of Example 1, except that the blending amount of the interesterified fat and oil (1) was changed from 16.2 parts by mass to 7.8 parts by mass, the blending amount of the interesterified fat and oil (2) was changed from 8.8 parts by mass to 4.2 parts by mass, and the blending amount of water was changed from 61 parts by mass to 74 parts by mass. The mass ratio between the contents of sodium and potassium of the cheese-like food (G) of the present invention was 3.6.

Details of the cheese-like foods (1) to (15) and (A) to (G) produced in Examples 1 to 15 and Comparative Examples 1 to 7 are shown in Table 1.

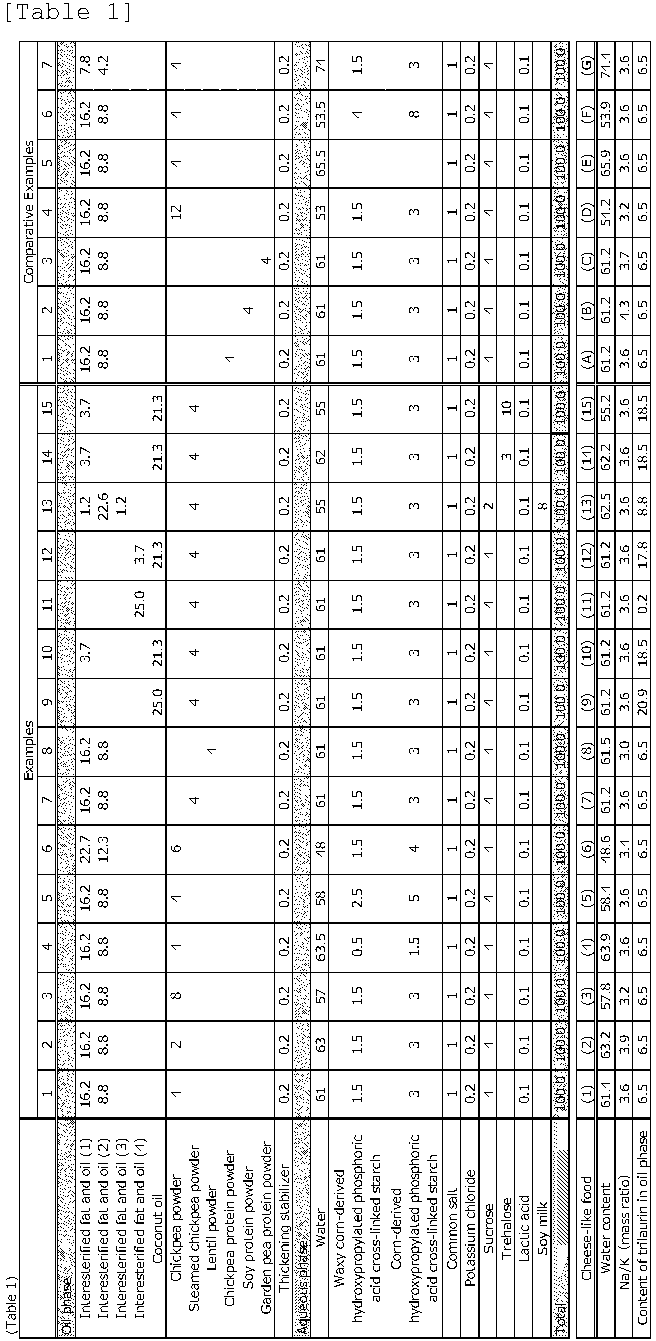

### [Study 1: Study of emulsion stability, taste, and texture of cheese-like food]

### <Evaluation of emulsion stability of cheese-like food>

Immediately after production, the states of the obtained cheese-like foods (1) to (15) and (A) to (G) were visually observed, and the emulsion stability was evaluated in accordance with the following criteria. Evaluation results were shown in Tables 2.

### [Emulsion stability evaluation criteria]

⊚ (Double circle mark): Oil was not separated at all, and emulsion stability was excellent.
O (Circle mark): Slight oil separation was observed, but emulsion stability was allowable.
△ (Triangle mark): Oil was separated, and emulsion stability was poor.
× (Cross mark): Oil was significantly separated, and emulsion stability was very poor.

### <Evaluation of taste and texture of cheese-like food>

For the cheese-like foods in which the rating in the evaluation of emulsion stability was any of double circle mark, circle mark and triangle mark, taste and texture were evaluated.

In the evaluation of taste and texture, five skillful panelists ate the cheese-like foods stored at 4°C for 7 days, and scored and evaluated the cheese-like foods in accordance with the following evaluation criteria. In the evaluation of texture, cream cheese (manufactured by Arla Foods Amba) was used as a control. The panelists scored and evaluated the cheese-like foods in accordance with the following evaluation criteria. Prior to the evaluation, the panelists fitted the degree of senses corresponding to each of scores in advance. The averages of evaluation results were shown in Table 3.

### [Taste evaluation criteria]

3 points: No odd taste was felt and refreshing sour taste was felt. Taste was excellent.
2 points: Odd taste was slightly felt, but refreshing sour taste was felt. Taste was good.
1 point: Odd taste was felt. Taste was poor.
0 point: Odd taste was strongly felt and no refreshing sour taste was felt. Taste was very poor.

### [Texture evaluation criteria]

3 points: Texture was very smooth and similar to cream cheese as the control. Texture was excellent.
2 points: Texture was slightly pasty and sticky or slightly viscous as compared to cream cheese as the control, but smooth. Texture was good.
1 point: Texture was pasty and sticky or viscous as compared to cream cheese as the control. Smoothness was slightly insufficient.
0 point: Texture was very pasty and sticky or very viscous as compared to cream cheese as the control, and not smooth. Texture was thus poor.

### [Table 2]

**(Table 2)**

| | Examples | | | | | | | | | | | | | | |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 |
| Emulsion stability | ⊚ | ○ | ⊚ | ⊚ | ⊚ | ⊚ | ⊚ | ○ | ○ | ⊚ | ⊚ | ⊚ | ⊚ | ⊚ | ⊚ |

| | Comparative Examples | | | | | | |
|---|---|---|---|---|---|---|---|
| | 1 | 2 | 3 | 4 | 5 | 6 | 7 |
| Emulsion stability | × | Δ | × | ⊚ | Δ | ⊚ | × |

### [Table 3]

**(Table 3)**

| | Examples | | | | | | | | | | | | | | |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 |
| Taste | 2.2 | 2.6 | 1.8 | 2.2 | 2.0 | 2.0 | 2.6 | 2.0 | 2.6 | 2.8 | 2.6 | 2.8 | 2.6 | 2.6 | 2.8 |
| Texture | 2.4 | 2.0 | 2.0 | 2.0 | 1.8 | 1.6 | 2.4 | 2.0 | 2.2 | 2.6 | 2.0 | 2.4 | 2.8 | 2.6 | 2.8 |

| | Comparative Exam ples | | | |
|---|---|---|---|---|
| | 2 | 4 | 5 | 6 |
| Taste | 0.8 | 1.4 | 1.8 | 2.0 |
| Texture | 1.2 | 1.4 | 0.8 | 0.4 |

As shown in Table 2, the cheese-like foods of the present invention showed no oil separation immediately after production, and exhibited an improved emulsion stability. The cheese-like food (2) of the present invention that contained the powder of chickpea in an amount of 2% by mass showed a slight oil separation compared to the other cheese-like foods of the present invention, but exhibited an improved emulsion stability. In addition, the cheese-like food (8) of the present invention that used the powder of lentil also showed a little oil separation compared to that using the powder of chickpea, but did not have any problems.

On the other hand, the cheese-like food (A) that used the protein powder of chickpea, which is produced by separating proteins from chickpea and does not contain a carbohydrate in an amount of 50 to 90% by mass in solid content, instead of the powder of chickpea showed severe oil separation and exhibited very poor emulsion stability. Similarly, the cheese-like foods (B) and (C) that used the soy protein powder and the garden pea protein powder, respectively, instead of the powder of chickpea also exhibited poor emulsion stability.

Oil separation was also observed in the cheese-like food (E) that contained no swelling-inhibiting starch. The cheese-like food (G) that had a high water content also exhibited very poor emulsion stability.

As shown in Table 3, the cheese-like foods of the present invention had no or almost no odd taste, had a good taste with a refreshing sour taste, and had a smooth and favorable texture. In particular, the cheese-like foods (7) and (9) to (15) that used the powder of steamed chickpea had no odd taste and had a smooth texture. In addition, the cheese-like food (8) that used the powder of lentil had a slightly odd taste compared to that using the powder of chickpea, but was acceptable, and had a good taste with a refreshing sour taste.

The cheese-like food (9) in which all the fats and oils contained were coconut oil had slightly less smoothness than those of the cheese-like foods (7), (10), and (13) that contained the fat and oil corresponding to the fat and oil A, which is an embodiment of the interesterified fat and oil, but was acceptable, and had a favorable texture.

In addition, the cheese-like food (11) in which all the fats and oils contained were the interesterified fat and oil (4) corresponding to the fat and oil C had a slightly inferior texture but no problem. The cheese-like food (12) that contained coconut oil corresponding to the fat and oil A and the interesterified fat and oil (4) corresponding to the fat and oil C had a favorable texture compared to that of the cheese-like food (11).

On the other hand, the cheese-like food (B) that used the soy protein powder instead of the powder of chickpea had an unfavorable taste derived from soybean that could be sensed as an odd taste, and was excessively soft and sticky due to poor emulsion stability, and had a poor texture. In addition, the cheese-like food (D) that contained 12% by mass of the powder of chickpea had a pasty and sticky texture due to the large amount of the starch derived from the powder of chickpea. The cheese-like food (E) that contained no swelling-inhibiting starch was excessively soft and sticky compared to cream cheese. The cheese-like food (F) that contained 12% by mass of the swelling-inhibiting starch was excessively hard compared to cream cheese, and had a bad texture, which was far from the cream cheese, because of its pasty and sticky texture.

### [Study 2: Hardness of cheese-like food]

### <Measurement of hardness of cheese-like food and cream cheese>

The hardness of each of the above-mentioned cheese-like foods (1), (7), and (13) and cream cheese (manufactured by Arla Foods Amba) was measured at 5°C.

The hardness was the largest hardness measured by using a FUDOH rheometer RTC (manufactured by Rheotech Co., Ltd.). In this measurement, a FUDOH rheometer dedicated adapter (1) for measuring a card was inserted 10 mm at a table speed: 6 cm/min. into a cheese-like food that had been packed in a circular stainless steel cup with a diameter of 6 cm and a height of 5 cm and that had been temperature-controlled to be at 5°C for 1 week. The measurement results are shown in Table 4.

### [Table 4]

**(Table 4)**

| | Examples | | | Cream cheese |
|---|---|---|---|---|
| | 1 | 7 | 13 | |
| Hardness (gf) | 340 | 350 | 260 | 300 |

As shown in Table 4, the cheese-like foods (1), (7), and (13), which are the cheese-like foods of the present invention, had hardness comparable to that of cream cheese.

### [Study 3: Freezing resistance and heat resistance of cheese-like food]

### <Evaluation of freezing resistance of cheese-like food>

The above-mentioned cheese-like foods (7), (14), and (15) were evaluated for freezing resistance by the following method.

Each of the cheese-like foods was filled into a circular plastic cup ("BioCup 120B 1P50" manufactured by RisuPack Co., Ltd.) and frozen in a freezer at -20°C for one week. After that, the food was allowed to stand in a refrigerator at 5°C for 12 hours and thawed. The state of water separation of each of the cheese-like foods after thawing was visually observed, and the freezing resistance was evaluated in accordance with the following criteria. The evaluation results are shown in Table 5.

### [Evaluation of freezing resistance]

⊚ (Double circle mark): There was no water separation, and freezing resistance was excellent.
O+(Circle plus mark): There was almost no water separation, and freezing resistance was good.
O(Circle mark): Slight water separation was observed, but was no problem, and the food had a freezing resistance.
△ (Triangle mark): Water separation was observed, and freezing resistance was poor.
× (Cross mark): Water separation was significantly observed, and the food had no freezing resistance.

### <Heat resistance of cheese-like food>

The above-mentioned cheese-like foods (7), (14) and (15) were evaluated for heat resistance by the following method.

Each of the cheese-like foods was scooped hemispherically with an ice disher (diametric 40 mm) and placed on a top plate. This food was baked in an oven under heating conditions at 180°C for 10 minutes. The oil separation and shape change of each of the cheese-like foods after baking were visually observed, and the heat resistance was evaluated in accordance with the following criteria. The evaluation results are shown in Table 5.

### [Evaluation of heat resistance]

⊚ (Double circle mark): Oil separation was slight and the food slightly deformed after heating, and so the food had a very good heat resistance.
O+(Circle plus mark): Oil separation was small, and the shape of the food slightly collapsed from the shape before heating, and the food had a good heat resistance.
O(Circle mark): There was no problem although the oil was slightly separated and a portion where the shape slightly collapsed from the shape before heating was observed. Thus, the food had a heat resistance.
△ (Triangle mark): Oil was separated, and the shape largely collapsed from the shape before heating, and so the heat resistance was poor.
× (Cross mark): Oil was severely separated, and no original shape before heating was left, and its heat resistance was very poor.

### [Table 5]

**(Table 5)**

| | Examples | | |
|---|---|---|---|
| | 7 | 14 | 15 |
| Freezing resistance | ○ | ○ + | ⊚ |
| Heat resistance | ○ | ○ | ⊚ |

As shown in Table 5, the cheese-like food (7) that used sucrose as a sugar had a slight oil-water separation after freezing and also after heating, but did not have any problems. In contrast, the cheese-like foods (14) and (15) that contained trehalose instead of sucrose had improved freezing resistance and heat resistance compared to the cheese-like food (7) in addition to the advantageous effects of the present invention.

In particular, the cheese-like food (15) that contained a larger amount of trehalose maintained smooth physical properties even after freezing and thawing, and maintained good shape retention properties without the cheese-like food being melted and flowing after heating.

Therefore, from the above-mentioned Study 3, it has been found that, the cheese-like food of the present invention using trehalose as a sugar can obtain, in addition to the advantageous effects of the present invention, good freezing resistance and heat resistance, and when the blending amount of trehalose is increased, the effects can also be enhanced.

### [Study 4: Food product using cheese-like food]

### <Production of baked cheesecake>

Using the above-mentioned cheese-like foods (1), (7), (13), and (B), and cream cheese (manufactured by Arla Foods Amba, containing 24.5 g of fat and 4.5 g of protein in 100 g of the product), baked cheesecakes (1), (7), (13), and (B) containing a cheese-like food, and a baked cheesecake (Cont.) containing cream cheese were produced in the following blends and production methods.

### [Blend of baked cheesecake]

Margarine: 100 parts by mass
Biscuit: 230 parts by mass
Cheese-like food or cream cheese: 250 parts by mass
Superfine sugar: 60 parts by mass
Lemon juice: 8 parts by mass
Soft wheat flour: 25 parts by mass
Soymilk: 100 parts by mass

### [Production method of baked cheesecake]

Biscuit was finely crushed and melted margarine was added thereto and thoroughly mixed to obtain a base crust. Fifty grams of the base crust was laid in a circular shape so as to be flat.

The cheese-like food or cream cheese returned to room temperature was thoroughly kneaded with a spatula or the like. Superfine sugar, lemon juice, sieved soft wheat flour, and soy milk were added to the kneaded food or cheese in this order, and the mixture was thoroughly mixed with a foaming machine each time to obtain a cheese dough. After mixing, 400 g of the cheese dough was poured into the base crust and baked in an oven heated to 180°C for 35 minutes to obtain each baked cheesecake.

The baked cheesecakes (1), (7) and (13) of the present invention produced by the above-described blends and production method had no outflow of cheese dough, had good baking color, and had an appearance comparable to that of the baked cheesecake (Cont.). Also, the taste was good without odd taste. Among these, the baked cheesecake (13) that used the cheese-like food (13) containing soymilk had a more favorable rich taste compared to the others. On the other hand, with regard to the baked cheesecake (B) produced using the cheese-like food (B) that used soy protein, since the cheese-like food (B) had poor emulsion stability and was excessively soft, the cheese dough was also excessively soft, so that the cheese dough had poor workability. In addition, the baked cheesecake (B) had a strong odd taste similar to the cheese-like food (B) and its taste was poor.

## Claims

1. A cheese-like food comprising an emulsified composition containing:
1 to 10% by mass in terms of solid content of beans containing 50 to 90% by mass of a carbohydrate in the solid content; and
1 to 10% by mass of a swelling-inhibiting starch, wherein the cheese-like food has a pH of 3.5 to 7.5 and a water content of 45 to 70% by mass.

2. The cheese-like food according to claim 1, wherein the beans containing 50 to 90% by mass of the carbohydrate in the solid content is one or more types of beans selected from the group consisting of an adzuki bean, a kidney bean, a pinto bean, a red kidney bean, a cowpea, a mung bean, a broad bean, a chickpea, a lentil, a lima bean, and a garden pea.

3. The cheese-like food according to claim 1, wherein the beans containing 50 to 90% by mass of the carbohydrate in the solid content is beans that have been subjected to a heating treatment.

4. The cheese-like food according to claim 1 or 2, wherein the swelling-inhibiting starch is a processed starch that has been subjected to at least a cross-linking treatment.

5. The cheese-like food according to claim 3, wherein the swelling-inhibiting starch is a processed starch that has been subjected to at least a cross-linking treatment.

6. The cheese-like food according to claim 1 or 2, having an oil content of 10 to 53% by mass.

7. The cheese-like food according to claim 1 or 2, wherein a content of an animal-derived material is 10% by mass or less in the cheese-like food.

8. A food product produced using the cheese-like food according to claim 1 or 2.

9. A method for producing a cheese-like food comprising:
a step of mixing and emulsifying an oil phase containing beans containing 50 to 90% by mass of a carbohydrate in a solid content and an aqueous phase containing a swelling-inhibiting starch to obtain a preliminary emulsion;
a step of adjusting a pH of the preliminary emulsion to be from 3.5 to 7.5;
a step of homogenizing the pH-adjusted preliminary emulsion to obtain an emulsion composition; and
a step of heat-sterilizing the obtained emulsion composition and then cooling it to 20°C or lower.
